# EUROPÄISCHE PATENTSCHRIFT

(11) **EP 3 219 583 B1**
(45) Veröffentlichungstag und Bekanntmachung des Hinweises auf die Patenterteilung: **30.01.2019**
(21) Anmeldenummer: 17159851.9
(22) Anmeldetag: 08.03.2017
(51) Int. Cl.: B62D 15/02

(54) **VERFAHREN ZUM ZUMINDEST SEMI-AUTONOMEN EINPARKEN EINES KRAFTFAHRZEUGS, FAHRERASSISTENZSYSTEM SOWIE KRAFTFAHRZEUG**
METHOD FOR AT LEAST SEMI-AUTOMATIC PARKING OF A MOTOR VEHICLE, DRIVER ASSISTANCE SYSTEM AND MOTOR VEHICLE
PROCÉDÉ DESTINÉ À LA MISE EN STATIONNEMENT AU MOINS SEMI-AUTOMATIQUE D'UN VÉHICULE AUTOMOBILE, SYSTÈME D'AIDE AU CONDUCTEUR ET VÉHICULE AUTOMOBILE

(30) Priorität: 14.03.2016 DE 102016104572
(43) Veröffentlichungstag der Anmeldung: 20.09.2017
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)

(56) Entgegenhaltungen:
- EP-A1- 1 642 767
- EP-A2- 2 689 990
- DE-A1-102013 221 355

## Beschreibung

Die Erfindung betrifft ein Verfahren zum zumindest semi-autonomen Einparken eines Kraftfahrzeugs in eine Parklücke aufweisend einen ersten Bereich und einen gegenüber dem ersten Bereich erhöhten zweiten Bereich, wobei bei dem Verfahren von zumindest einem Rad des Kraftfahrzeugs während des Einparkens ein Übergang zwischen dem ersten Bereich und dem zweiten Bereich zumindest teilweise überfahren wird. Die Erfindung betrifft außerdem ein Fahrerassistenzsystem sowie ein Kraftfahrzeug.

Es ist bereits aus dem Stand der Technik bekannt, Kraftfahrzeuge zumindest semi-autonom zu manövrieren, um sie beispielsweise in eine Parklücke einzuparken. Beim semi-autonom Manövrieren übernimmt ein Fahrerassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch beschleunigt und abgebremst wird. Mittels eines solchen Fahrerassistenzsystems kann das Kraftfahrzeug beispielsweise zumindest semi-autonom eingeparkt werden. Dazu weisen solche Fahrerassistenzsysteme üblicherweise Sensoren auf, welche Parklücken beziehungsweise freie Stellplätze in einem Umgebungsbereich des Kraftfahrzeugs erkennen und vermessen können.

Dabei ist es auch bekannt, einen Fahrer beim Einparken in eine Parklücke zu unterstützen, welche einen ersten Bereich und einen gegenüber dem ersten Bereich erhöhten zweiten Bereich aufweist. Bei einer solchen Parklücke kann der erste Bereich beispielsweise auf einem Niveau einer Fahrbahn des Kraftfahrzeugs liegen und der zweite Bereich durch eine Stufe ausgebildet sein. Ein Übergang zwischen diesem ersten Bereich und dem zweiten Bereich kann beispielsweise durch eine Bordsteinkante beziehungsweise eine Randsteinkante ausgebildet sein.

Dazu ist aus der DE 10 2009 003 216 A1 beispielsweise ein Fahrerassistenzverfahren zum Auslösen einer vorbestimmten Aktion in Abhängigkeit eines erfassten Höhenprofils einer Fahrbahnoberfläche eines Kraftfahrzeugs bekannt. Wenn anhand des Höhenprofils ein Bordstein erfasst wurde, so kann beispielsweise eine Einparktrajektorie für das Kraftfahrzeug derart angepasst werden, dass sie in einem vorbestimmten Winkel über den Bordstein führt. In der EP 2 689 990 A2 ist beispielsweise ein Verfahren beschrieben, bei welchem eine Bordsteinüberfahrt eines Kraftfahrzeugs bei einem Rangiermanöver anhand einer fortlaufenden Auswertung einer Radgeschwindigkeit jedes Rades erkannt wird.

EP 1 642 767 A1 ist als nächstliegender Stand der Technik nach dem Oberbegriff des Anspruchs 1 und beschreibt ein Verfahren zur Einparkunterstützung für ein Fahrzeug, bei dem ein Fahrwiderstand des Fahrzeugs aus Messgrößen abgeleitet wird und eine Begrenzung einer Parklücke dann ermittelt wird, wenn sich der Fahrwiderstand über ein vorgegebenes Maß hinaus ändert
Dieser Übergang soll während des Einparkens von zumindest einem Rad des Kraftfahrzeugs möglichst so überfahren beziehungsweise überwunden werden, dass das zumindest eine Rad in einer Parkstellung des Kraftfahrzeugs, in welcher das Kraftfahrzeug zumindest teilweise auf dem zweiten Bereich positioniert ist, nicht durch den Übergang, beispielsweise durch Anstehen an dem Übergang, beschädigt wird.

Es ist Aufgabe der vorliegenden Erfindung, eine Lösung bereitzustellen, wie ein Kraftfahrzeug zuverlässig und beschädigungsfrei in eine Parklücke aufweisend zwei Bereiche mit unterschiedlichen Höhenniveaus zumindest semi-autonom eingeparkt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Bei einer Ausgestaltung eines erfindungsgemäßen Verfahrens zum zumindest semi-autonomen Einparken eines Kraftfahrzeugs in eine Parklücke aufweisend einen ersten Bereich und einen gegenüber dem ersten Bereich erhöhten zweiten Bereich wird von zumindest einem Rad des Kraftfahrzeugs ein Übergang zwischen dem ersten Bereich und dem zweiten Bereich zumindest teilweise überfahren. Erfindungsgemäß wird anhand des zumindest einen, sich zumindest teilweise in dem zweiten Bereich befindlichen Rads eine Überfahrt des Übergangs als erfolgreich oder als fehlgeschlagen bewertet, und das zumindest eine Rad aus dem zweiten Bereich zurück in den ersten Bereich bewegt, falls die Überfahrt als fehlgeschlagen bewertet wird, wobei bei einer als fehlgeschlagen bewerteten Überfahrt das Kraftfahrzeug automatisch in einen Leerlauf überführt wird und das zumindest eine Rad durch eine durch den Leerlauf hervorgerufene Rollbewegung des zumindest einen Rads von dem zweiten Bereich in den ersten Bereich bewegt wird.

Bevorzugt wird bei einem Verfahren zum zumindest semi-autonomen Einparken eines Kraftfahrzeugs in eine Parklücke aufweisend einen ersten Bereich und einen gegenüber dem ersten Bereich erhöhten zweiten Bereich von zumindest einem Rad des Kraftfahrzeugs während des Einparkens ein Übergang zwischen dem ersten Bereich und dem zweiten Bereich zumindest teilweise überfahren. Darüber hinaus wird anhand des zumindest einen, sich zumindest teilweise in dem zweiten Bereich befindlichen Rads eine Überfahrt des Hindernisses als erfolgreich oder als fehlgeschlagen bewertet, und das zumindest eine Rad von dem zweiten Bereich zurück in den ersten Bereich bewegt, falls die Überfahrt als fehlgeschlagen bewertet wird.

Mittels des Verfahrens kann ein Fahrerassistenzsystem realisiert werden, durch welches das Kraftfahrzeug zumindest semi-autonom in die Parklücke eingeparkt werden kann. Dies bedeutet, dass das Kraftfahrzeug semi-autonom oder autonom in die Parklücke eingeparkt wird. Das Kraftfahrzeug kann dabei sowohl in eine als eine Querparklücke ausgebildete Parklücke als auch in eine als Längsparklücke ausgebildete Parklücke eingeparkt werden. Die Parklücke kann beispielsweise anhand von Sensordaten einer fahrzeugseitigen Sensoreinrichtung erkannt und vermessen werden. Zu diesem Zweck kann das Kraftfahrzeug beispielsweise bewegt werden, während ein Umgebungsbereich des Kraftfahrzeugs mittels der Sensoreinrichtung insbesondere kontinuierlich erfasst wird. Die fahrzeugseitige Sensoreinrichtung kann beispielsweise ein Ultraschallsensor und/oder eine Kamera und/oder ein Laserscanner sein. Insbesondere kann mit der fahrzeugseitigen Sensoreinrichtung auch der Übergang zwischen dem ersten und dem zweiten Bereich der Parklücke, welcher insbesondere als eine Bordsteinkante ausgebildet ist, erkannt werden und ein Abstand zwischen dem Kraftfahrzeug und dem Übergang erfasst werden.

Der Übergang ist dabei insbesondere derart in der Parklücke angeordnet, dass das Kraftfahrzeug nach Beendigung des Einparkvorgangs in einer Parkstellung zumindest teilweise auf dem zweiten Bereich platziert beziehungsweise positioniert ist. Insbesondere muss dazu der Übergang während des Einparkens von zumindest einem Rad des Kraftfahrzeugs überfahren werden. Für den Einparkvorgang des Kraftfahrzeugs in die Parklücke kann beispielsweise eine Parktrajektorie bestimmt werden, entlang welcher sich das Kraftfahrzeug während des Einparkens zumindest semi-autonom bewegt. Die Parktrajektorie wird dabei beispielsweise ausgehend von dem Kraftfahrzeug durch den ersten Bereich hindurch führend, den Übergang kreuzend und in den zweiten Bereich führend bestimmt. Während des Einparkens wird das zumindest eine Rad entlang der Parktrajektorie und damit zumindest teilweise über den Übergang bewegt. Zum Überwinden des Übergangs, welcher ein Hindernis für das zumindest eine Rad darstellt, wird dabei beispielsweise ein bestimmtes Drehmoment auf das zumindest eine Rad übertragen. Anhand von Odometrieparametern des Kraftfahrzeugs, beispielsweise anhand von Radumdrehungen des zumindest einen Rads, kann während des Einparkvorgangs eine durch das Kraftfahrzeug entlang der Parktrajektorie zurückgelegte Strecke erfasst werden. Anhand der zurückgelegten Strecke und anhand einer, beispielsweise durch die Sensoreinrichtung erfassten, Position des Übergangs auf der Parktrajektorie kann ein Zeitpunkt der Überfahrt erfasst werden. Anders ausgedrückt kann erfasst werden, wann das zumindest eine Rad den Übergang überwunden haben sollte.

Insbesondere nach diesem Zeitpunkt kann bewertet werden, ob das zumindest eine Rad den Übergang erfolgreich oder nicht erfolgreich überfahren hat. Eine erfolgreiche Überfahrt ist beispielsweise dadurch charakterisiert, dass das zumindest eine Rad den Übergang vollständig überwunden hat und derart in dem zweiten Bereich positioniert ist, dass eine Lauffläche eines Reifens des Rads den Übergang, insbesondere die Bordsteinkante, nicht berührt. Falls diese erfolgreiche Überfahrt erkannt wird, wird der Einparkvorgang als erfolgreich bewertet und beendet, da eine sichere Parkstellung für das Kraftfahrzeug erreicht ist. Eine fehlgeschlagene beziehungsweise nicht erfolgreiche Überfahrt wird beispielsweise dadurch erkannt, dass die Lauffläche des Reifens des Rads nach Beendigung des Einparkvorgangs die Bordsteinkante berührt und somit beschädigt werden könnte, wenn das Kraftfahrzeug beispielsweise über längere Zeit in dieser Stellung verweilt. Die Berührung kann beispielsweise daraus resultieren, dass das Rad den Übergang nicht vollständig überwunden hat, sondern an dem Übergang ansteht und somit teilweise in dem ersten Bereich und teilweise in dem zweiten Bereich angeordnet ist. Falls die Überfahrt als fehlgeschlagen bewertet wird, so wird die Position des zumindest einen Rads verändert, indem das zumindest eine Rad von dem zweiten Bereich zurück in den ersten Bereich bewegt wird. Insbesondere wird das zumindest eine Rad so weit bewegt, dass es sich vollständig in dem ersten Bereich befindet. Anders ausgedrückt wird das zumindest eine Rad in dem ersten Bereich beabstandet zu dem Übergang angeordnet. Von dort aus kann dann ein weiterer Versuch zur Überwindung des Übergangs erneut gestartet werden.

Durch die Bewertung der Überfahrt kann also in vorteilhafter Weise erfasst werden, ob die von dem Kraftfahrzeug nach der Überfahrt eingenommene Stellung schädlich für die Räder des Kraftfahrzeugs ist. Falls die Stellung schädlich für die Räder des Kraftfahrzeugs ist, kann durch die Positionsveränderung des Rads in vorteilhafter Weise verhindert werden, dass das Rad des Kraftfahrzeugs sowie das Kraftfahrzeug selbst beschädigt werden.

Bei einer als fehlgeschlagen bewerteten Überfahrt wird das zumindest eine Rad durch automatisches Beschleunigen des Kraftfahrzeugs autonom von dem zweiten Bereich in den ersten Bereich bewegt. Wenn also beispielsweise der Abstand des vorbestimmten, sich innerhalb des zweiten Bereiches der Parklücke befindlichen Reifenbereiches zu dem Übergang den vorgegebenen Abstand unterschreitet, so wird durch das Fahrerassistenzsystem automatisch das Gaspedal betätigt, sodass das Kraftfahrzeug autonom bewegt wird. Dadurch wird das zumindest eine Rad von dem zweiten Bereich hinab in den ersten Bereich bewegt und dort, insbesondere beabstandet zu dem Übergang, positioniert.

Bevorzugt wird die Überfahrt anhand einer Position eines vorbestimmten Reifenbereiches des zumindest einen Rads relativ zu dem Übergang bewertet. Der Reifenbereich ist insbesondere eine Reifenaufstandsfläche, welche denjenigen Teil einer Lauffläche eines Reifens des Rads beschreibt, welcher Kontakt zu einer Oberfläche einer Fahrbahn des Kraftfahrzeugs hält. Dabei kann vorgesehen sein, dass der vorbestimmte Reifenbereich anhand eines auf dem ersten und/oder dem zweiten Bereich senkrecht stehenden Reifenquerschnitts des zumindest einen Rads bestimmt wird. Mit anderen Worten bedeutet dies, dass ein Lotfußpunkt in dem ersten Bereich oder dem zweiten Bereich eines entlang eines Reifendurchmessers verlaufenden Lots auf den ersten und/oder den zweiten Bereich bestimmt wird. Zum Bewerten, ob die Überfahrt erfolgreich oder fehlgeschlagen ist, wird die Position der Reifenaufstandsfläche beziehungsweise des Lotfußpunktes relativ zu dem Übergang bestimmt. Insbesondere wird die Überfahrt als fehlgeschlagen bewertet, falls sich der vorbestimmte Reifenbereich des zumindest einen Rads in dem zweiten Bereich befindet und einen vorbestimmten Abstand zu dem Übergang unterschreitet, oder falls sich der vorbestimmte Reifenbereich des zumindest einen Rads in dem ersten Bereich befindet.

In einem ersten Fall einer fehlgeschlagenen Überfahrt hat das zumindest eine Rad den Bordstein zwar überwunden und die Reifenaufstandsfläche ist in dem zweiten Bereich angeordnet, aber der Abstand zwischen der Reifenaufstandsfläche und dem Übergang unterschreitet den vorbestimmten Abstand. Dies bedeutet insbesondere, dass der Reifen an dem Übergang übersteht und der Übergang beziehungsweise die Kante in die Lauffläche des Reifens drückt. Dadurch kann der Reifen beschädigt werden. Der vorbestimmte Abstand ist also so gewählt, dass gewährleistet werden kann, dass der Reifen durch den Übergang nicht mit einem schädlichen Druck beaufschlagt wird. Der vorbestimmte Abstand weist insbesondere einen Wert zwischen einschließlich 15 cm und einschließlich 20 cm auf. In einem zweiten Fall einer fehlgeschlagenen Überfahrt hat das zumindest eine Rad den Bordstein nicht überwunden und die Reifenaufstandsfläche ist in dem ersten Bereich angeordnet. In diesem Fall steht der Reifen an dem Übergang an, wodurch der Übergang ebenfalls in die Lauffläche des Reifens drückt. Anhand der Position des vorbestimmten Reifenbereiches relativ zum Übergang kann somit ein einfaches und schnell zu überprüfendes Kriterium für die Bewertung der Überfahrt bereitgestellt werden.

Vorzugsweise wird die Position des vorbestimmten Reifenbereiches relativ zu dem Übergang anhand von zumindest einem Odometrieparameter des Kraftfahrzeugs bestimmt. Als der zumindest eine Odometrieparameter wird insbesondere eine Anzahl von Radumdrehungen erfasst, welche das Rad während der Bewegung entlang der Parktrajektorie durchführt. Bei Beginn des Einparkvorgangs kann das Kraftfahrzeug, beispielsweise mittels eines Ultraschallsensors, bezüglich des Übergangs lokalisiert werden. Ein Abstand zwischen dem Kraftfahrzeug und dem Übergang kann durch eine Anzahl an Radumdrehungen charakterisiert werden, welche das Kraftfahrzeug von Beginn bis zu dem Übergang durchführen muss. Während des Einparkvorgangs wird die Anzahl an Radumdrehungen erfasst. Anhand der Anzahl an Radumdrehungen, welche das Kraftfahrzeug bis zum Ende des Einparkvorgangs durchgeführt hat, kann die Lage des Rades bezüglich des Übergangs bestimmt beziehungsweise geschätzt werden. Durch das Bestimmen des zumindest einen Odometrieparameters kann somit die Position des vorbestimmten Reifenbereichs relativ zu dem Übergang besonders einfach bestimmt werden. Der Übergang muss also nicht kontinuierlich zur Abstandsbestimmung mit Sensoren erfasst werden.

Erfindungsgemäß wird bei einer als fehlgeschlagen bewerteten Überfahrt das Kraftfahrzeug automatisch in einen Leerlauf überführt und das zumindest eine Rad durch eine durch den Leerlauf hervorgerufene Rollbewegung des zumindest einen Rads von dem zweiten Bereich in den ersten Bereich bewegt. Dazu kann das Fahrerassistenzsystem insbesondere automatisch Schalt- und Kupplungsvorgänge des Kraftfahrzeugs durchführen. Das Kraftfahrzeug weist also hier insbesondere ein Automatikgetriebe auf. Durch Bereitstellen des Leerlaufes ist das Getriebe des Kraftfahrzeugs nicht gegen ein Wegrollen des Kraftfahrzeugs verriegelt. Diese Wegrollbewegung ist in diesem Fall erwünscht und wird durch Bereitstellen des Leerlaufs hervorgerufen, sodass das zumindest eine Rad, dessen Reifenbereich sich beispielsweise in dem zweiten Bereich der Parklücke an dem Übergang befindet, von dem zweiten Bereich hinab in den ersten Bereich rollt. Das Verfahren ist hierbei besonders energiesparend gestaltet, da das Kraftfahrzeug ohne großen Energieaufwand seine Position verändern kann.

Es erweist sich als vorteilhaft, wenn das zumindest eine Rad des Kraftfahrzeugs bei einer als fehlgeschlagen bewerteten Überfahrt für einen weiteren Versuch zur Überfahrt des Übergangs von dem zweiten Bereich zu einer vorbestimmten Startposition in den ersten Bereich bewegt wird. Dies bedeutet, dass das Kraftfahrzeug in dem ersten Bereich derart relativ zu dem Übergang positioniert wird, dass sich das zumindest eine Rad an der vorbestimmten Startposition innerhalb des ersten Bereiches befindet. Ausgehend von dieser Startposition kann dann der Überfahrtsvorgang erneut gestartet werden, indem beispielsweise ein im Vergleich zu dem bei dem ersten, fehlgeschlagenen Versuch der Überfahrt bereitgestellten Drehmoment höheres Drehmoment auf das zumindest eine Rad übertragen wird.

Vorzugsweise wird das Kraftfahrzeug zum Bereitstellen einer Rollbewegung des zumindest einen Rads von dem zweiten Bereich in den ersten Bereich automatisch in einen Leerlauf überführt. Außerdem wird bestimmt, ob eine Position des zumindest einen Rads nach Beendigung der Rollbewegung mit der Startposition übereinstimmt, und das zumindest eine Rad durch automatisches Beschleunigen des Kraftfahrzeugs an der Startposition positioniert, falls die Position des zumindest einen Rads nach der Beendigung der Rollbewegung nicht mit der Startposition übereinstimmt. Dies bedeutet, dass das zumindest eine Rad zunächst durch Bereitstellen des Leerlaufs von dem zweiten Bereich in den ersten Bereich rollt. Falls das zumindest eine Rad während der Rollbewegung die vorbestimmte Startposition erreicht, kann das Kraftfahrzeug automatisch abgebremst werden. Falls das auf das Rad aufgebrachte Rollmoment nicht ausreichend war, um das zumindest eine Rad mittels der Rollbewegung an der Startposition zu positionieren, wird das Kraftfahrzeug automatisch beschleunigt und damit das zumindest eine Rad an die Startposition bewegt.

Insbesondere wird die Position des zumindest einen Rads bezüglich der Startposition anhand von zumindest einem Odometrieparameter, insbesondere einer Anzahl an Radumdrehungen, während der Rollbewegung des zumindest einen Rads bestimmt. Somit kann anhand einer bekannten Entfernung zwischen dem zumindest einen, sich zumindest teilweise in dem zweiten Bereich befindlichen Rads und der Startposition in dem ersten Bereich und anhand des zumindest einen Odometrieparameters bestimmt werden, ob das zumindest eine Rad während der Rollbewegung die Entfernung zurückgelegt hat. Falls nicht, kann ein noch fehlender Teil der Entfernung durch automatisches Beschleunigen des Kraftfahrzeugs zurückgelegt werden.

Die Erfindung betrifft außerdem ein Fahrerassistenzsystem für ein Kraftfahrzeug zum zumindest semi-autonomen Einparken des Kraftfahrzeugs in eine Parklücke aufweisend einen ersten Bereich und einen gegenüber dem ersten Bereich erhöhten zweiten Bereich, wobei das Fahrerassistenzsystem zum Durchführen eines erfindungsgemäßen Verfahrens ausgelegt ist. Das Fahrerassistenzsystem weist zum Durchführen des Verfahrens insbesondere eine Steuereinrichtung auf, welche insbesondere auch dazu ausgelegt ist, Schalt- und Kupplungsvorgänge des Kraftfahrzeugs zu übernehmen sowie in ein Antriebs- und Bremssystem des Kraftfahrzeugs einzugreifen. Außerdem weist das Fahrerassistenzsystem vorzugsweise zumindest eine Sensoreinrichtung, beispielsweise zumindest einen Ultraschallsensor und/oder zumindest eine Kamera und/oder zumindest einen Laserscanner, zum Erfassen der Parklücke und zum Bestimmen eines Abstands zwischen dem Kraftfahrzeug und dem Übergang in der Parklücke auf.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Mit Angaben "über", "auf", "unter", "hinab", etc. sind für einen vor dem Kraftfahrzeug stehenden und in Längsrichtung blickenden Beobachter sich ergebene Positionierungen angegeben.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs beim Einparken in eine Parklücke;
- Fig. 2: eine schematische Darstellung eines Rades des Kraftfahrzeugs bei einer als erfolgreich bewerteten Überfahrt eines Übergangs;
- Fig. 3: eine schematische Darstellung des Rades bei einer als fehlgeschlagen bewerteten Überfahrt des Übergangs; und
- Fig. 4: eine schematische Darstellung des Rades bei einer weiteren als fehlgeschlagen bewerteten Überfahrt des Übergangs.

In den Figuren sind gleiche sowie funktionsgleiche Elemente mit den gleichen Bezugszeichen versehen.

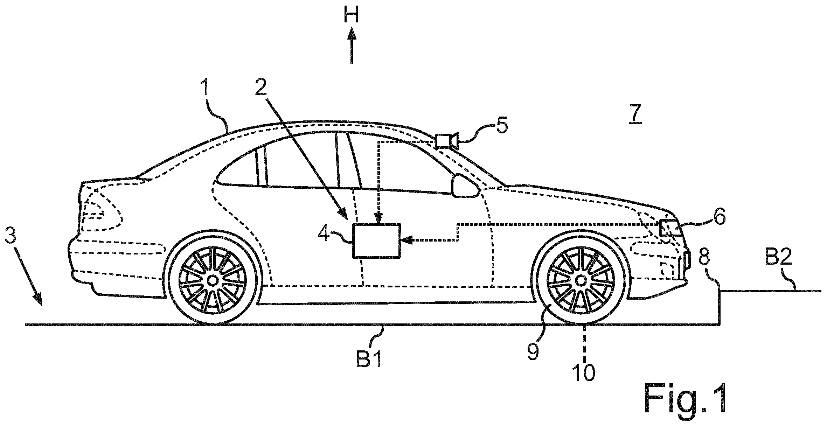

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches einen Fahrer des Kraftfahrzeugs 1 beim zumindest semi-autonomen Einparken in eine Parklücke 3 unterstützt. Das Fahrerassistenzsystem 2 weist hier eine Steuereinrichtung 4 auf, welche beispielsweise durch ein fahrzeugseitiges Steuergerät ausgebildet sein kann. Die Steuereinrichtung 4 ist insbesondere dazu ausgelegt, zum Bereitstellen eines semi-autonomen Einparkvorgangs in eine Lenkung des Kraftfahrzeugs 1 einzugreifen und zum Bereitstellen eines vollautonomen Einparkvorgangs zusätzlich ein Gaspedal und eine Bremse des Kraftfahrzeugs 1 zu betätigen. Außerdem kann die Steuereinrichtung 4 beispielsweise in eine Kupplung und eine Schaltung des Kraftfahrzeugs 1 betätigen. Das Fahrerassistenzsystem 2 weist hier außerdem zumindest eine Sensoreinrichtung 5, 6 auf, welche zum Überwachen eines Umgebungsbereichs 7 des Kraftfahrzeugs 1 ausgebildet ist. Hier weist das Fahrerassistenzsystem 2 zwei Sensoreinrichtungen 5, 6 auf, wobei eine erste Sensoreinrichtung 5 beispielsweise als eine Kamera ausgebildet ist und eine zweite Sensoreinrichtung 6 beispielsweise als ein Ultraschallsensor ausgebildet ist.

Mittels der fahrzeugseitigen Sensoreinrichtungen 5, 6 kann die Parklücke 3, beispielsweise bei einer Fahrt des Kraftfahrzeugs 1 in Richtung der Parklücke 3, erfasst und vermessen werden. Die Parklücke 3 weist einen ersten Bereich B1 und einen gegenüber dem ersten Bereich B1 erhabenen beziehungsweise erhöhten zweiten Bereich B2 auf. Der zweite Bereich B2 ist also entlang einer Fahrzeughochrichtung H oberhalb des ersten Bereiches B1 angeordnet. Die Bereiche B1, B2 sind durch einen Übergang 8 voneinander getrennt, welcher insbesondere durch eine Borsteinkante ausgebildet ist. Im vorliegenden Fall ist die Parklücke 3 als eine Querparklücke ausgebildet, in welche das Kraftfahrzeug 1 hier zumindest semi-autonom vorwärts einparkt. Der Übergang 8 ist dabei derart in der Parklücke 3 angeordnet, dass das Kraftfahrzeug 1 in einer Parkstellung zumindest teilweise in dem zweiten Bereich B2 positioniert ist. Insbesondere muss dazu während des zumindest semi-autonomen Einparkvorgangs in die Parklücke 3 der Übergang 8 von zumindest einem Rad 9 des Kraftfahrzeugs 1, hier zumindest von beiden Vorderrädern des Kraftfahrzeugs 1, überfahren und überwunden werden. Zur Überfahrt des Übergangs 8 kann von der Steuereinrichtung 4 beispielsweise ein Drehmoment auf das zumindest eine Rad 9 übertragen werden.

Nach Beendigung der Überfahrt ist das zumindest eine Rad 9 zumindest teilweise in dem zweiten Bereich B2 positioniert. Das zumindest eine Rad 9 soll aber so in dem zweiten Bereich B2 positioniert sein, dass das zumindest eine Rad 9 in der Parkstellung des Kraftfahrzeugs 1 nicht beschädigt wird. Dazu wird, beispielsweise von der Steuereinrichtung 4, anhand des zumindest einen Rads 9 bewertet, ob die Überfahrt erfolgreich war oder fehlgeschlagen ist. Falls bewertet wurde, dass die Überfahrt des Übergangs 8 erfolgreich war, so kann der gesamte Einparkvorgang als erfolgreich bewertet und beendet werden. Nach diesem erfolgreichen Einparkvorgang des Kraftfahrzeugs 1 wird das zumindest eine Rad 9 in der Parkstellung des Kraftfahrzeugs 1 insbesondere nicht beschädigt. Falls jedoch bewertet wurde, dass die Überfahrt fehlgeschlagen ist, so wird das zumindest eine, zumindest teilweise in dem zweiten Bereich B2 positionierte Rad 9 von dem zweiten Bereich B2 zurück zu dem ersten Bereich B1 bewegt, sodass das zumindest eine Rad 9 in dem ersten Bereich B1 beabstandet zu dem Übergang 8 angeordnet ist. Dazu kann das Kraftfahrzeug 1 aktiv von der Steuereinrichtung 4 bewegt, also automatisch beschleunigt, werden. Auch kann vorgesehen sein, dass die Steuereinrichtung 4 das Kraftfahrzeug 1 automatisch in einen Leerlauf überführt. Durch den Leerlauf und durch die erhöhte Position des zumindest einen Rads 9 in dem zweiten Bereich B2 erfährt das zumindest eine Rad 9 ein Rollmoment und führt eine Rollbewegung zurück in den ersten Bereich B1 durch.

Insbesondere soll das Rad 9 zurück zu einer Startposition 10 in dem ersten Bereich B1 bewegt werden, sodass ein erneuter Versuch zur Überwindung des Übergangs 8 für das Kraftfahrzeug 1 bereitgestellt werden kann. Dazu stellt die Steuereinrichtung 4 insbesondere zunächst den Leerlauf für das Kraftfahrzeug 1 bereit, sodass das zumindest eine Rad 9 von dem zweiten Bereich B2 zurück in den ersten Bereich B1 rollt. Dabei kann die Steuereinrichtung 4 anhand von Odometrieparametern des Kraftfahrzeugs 1 erkennen, ob das Kraftfahrzeug 1 weit genug gerollt ist, sodass sich das zumindest eine Rad 9 an der Startposition 10 befindet. Falls das Kraftfahrzeug 1 nicht zu der Startposition 10 zurückgerollt ist, kann die Steuereinrichtung 4 das Kraftfahrzeug 1 zusätzlich beschleunigen, bis das zumindest eine Rad 9 an der Startposition 10 positioniert ist. Ausgehend von dieser Startposition 10 kann das Kraftfahrzeug 1 erneut, beispielsweise mit einem erhöhten Drehmoment für das zumindest eine Rad 9, zumindest semi-autonom über den Übergang 8 bewegt werden.

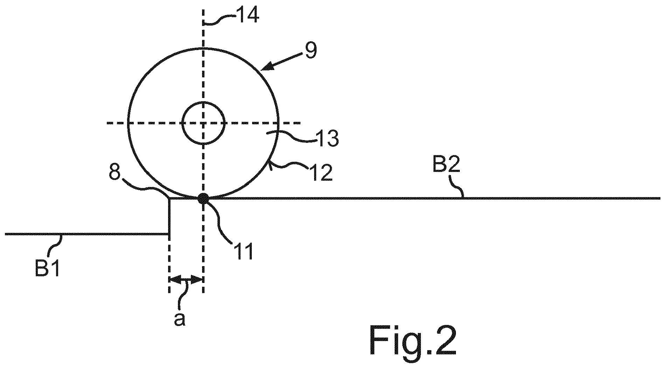

In Fig. 2 ist das zumindest eine Rad 9 gezeigt, welches sich in dem zweiten Bereich B2 befindet und anhand welches die Überfahrt als erfolgreich bewertet wurde. Hier weist nämlich ein vorbestimmter Reifenbereich 11, insbesondere eine Aufstandsfläche einer Lauffläche 12 eines Reifens 13 des Rads 9, einen Abstand a bezüglich des Übergangs auf, welcher einen vorbestimmten Abstand überschreitet. Der vorbestimmte Abstand ist dabei so gewählt, dass der Übergang 8 keinen für das Rad 9 schädlichen Druck auf den Reifen 13 ausübt, indem der Übergang 8 beispielsweise in die Lauffläche 12 drückt. Bei dem sich in dem zweiten Bereich B2 befindlichen vorbestimmten Reifenbereich 11 kann ein Wert für den vorbestimmten Abstand zwischen 15 cm und 20 cm vorgegeben werden. Der vorbestimmte Reifenbereich 11 ist hier durch einen Reifenquerschnitt 14 vorgegeben, welcher senkrecht zu dem zweiten Bereich B2 orientiert ist.

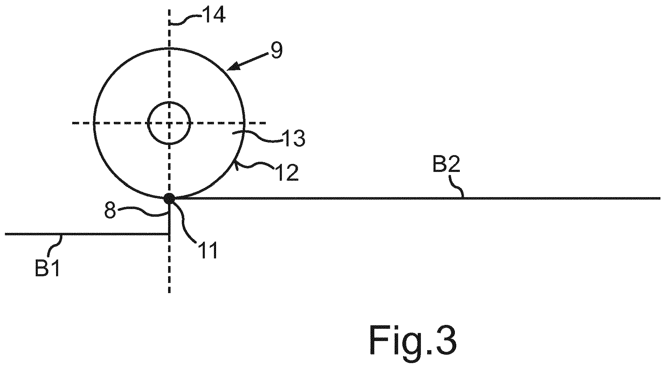

In Fig. 3 ist das Rad 9 gezeigt, welches sich teilweise in dem zweiten Bereich B2 befindet und anhand welches die Überfahrt als fehlgeschlagen bewertet wurde. Hier befindet sich der vorbestimmte Reifenbereich 11 an dem Übergang 8 in dem zweiten Bereich B2, sodass das Rad 9 teilweise an dem Übergang 8 übersteht und der Reifen 13 bereichsweise über den Übergang 8 hinausragt. Der Reifenquerschnitt 14 verläuft also hier entlang des Übergangs 8. Dadurch wird der vorbestimmte Abstand zwischen dem Reifenbereich 11 und dem Übergang 8 unterschritten und die Lauffläche 13 mit einem für den Reifen 13 schädlichen Druck beaufschlagt, welcher zur Zerstörung des Reifens 13 führen kann.

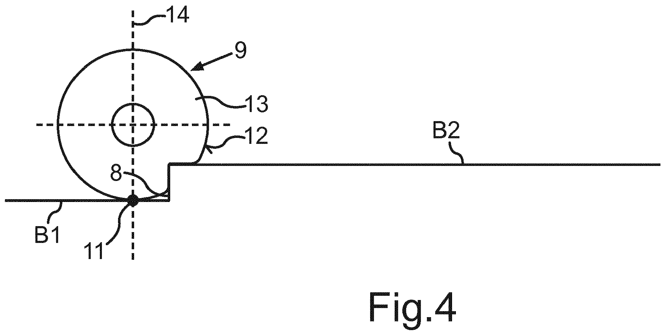

In Fig. 4 ist das Rad 9 gezeigt, welches sich teilweise, insbesondere überwiegend, in dem ersten Bereich B1 und teilweise in dem zweiten Bereich B2 befindet und anhand welches die Überfahrt ebenfalls als fehlgeschlagen bewertet wurde. Hier wurde der Übergang 8 nur teilweise überfahren, sodass sich der vorbestimmte Reifenbereich 11 in dem ersten Bereich B1 befindet. Dabei steht der Reifen 13 mit seiner Lauffläche 12 an dem Übergang 8 an. Der dadurch auf den Reifen 13 aufgebrachte Druck kann ebenfalls zu einer Beschädigung des Reifens 13 führen.

Die Überfahrt wird also anhand einer Position des vorbestimmten Reifenbereiches 11 relativ zu dem Übergang 8 bewertet. Bei den in Fig. 3 und Fig. 4 gezeigten Beispielen, bei welchen die Überfahrt als fehlgeschlagen bewertet wurde, wird das Rad 9 wieder in dem ersten Bereich B1, insbesondere an der Startposition 10 positioniert, um einen erneuten Versuch zur Überwindung des Übergangs 8 zu starten.

## Patentansprüche

1. Verfahren zum zumindest semi-autonomen Einparken eines Kraftfahrzeugs (1) in eine Parklücke (3) aufweisend einen ersten Bereich (B1) und einen gegenüber dem ersten Bereich (B1) erhöhten zweiten Bereich (B2), wobei bei dem Verfahren von zumindest einem Rad (9) des Kraftfahrzeugs (1) während des Einparkens ein Übergang (8) zwischen dem ersten Bereich (B1) und dem zweiten Bereich (B2) zumindest teilweise überfahren wird,
wobei anhand des zumindest einen, sich zumindest teilweise in dem zweiten Bereich (B2) befindlichen Rads (9) eine Überfahrt des Übergangs (8) als erfolgreich oder als fehlgeschlagen bewertet wird, und das zumindest eine Rad (9) von dem zweiten Bereich (B2) zurück in den ersten Bereich (B1) bewegt wird, falls die Überfahrt als fehlgeschlagen bewertet wird,
**dadurch gekennzeichnet, dass**
bei einer als fehlgeschlagen bewerteten Überfahrt das Kraftfahrzeug (1) automatisch in einen Leerlauf überführt wird und das zumindest eine Rad (9) durch eine durch den Leerlauf hervorgerufene Rollbewegung des zumindest einen Rads (9) von dem zweiten Bereich (B2) in den ersten Bereich (B1) bewegt wird.

2. Verfahren nach Anspruch 1,
**dadurch gekennzeichnet, dass**
die Überfahrt anhand einer Position eines vorbestimmten Reifenbereiches (11) des zumindest einen Rads (9) relativ zu dem Übergang (8) bewertet wird.

3. Verfahren nach Anspruch 2,
**dadurch gekennzeichnet, dass**
die Überfahrt als fehlgeschlagen bewertet wird, falls sich der vorbestimmte Reifenbereich (11) des zumindest einen Rads (9) in dem zweiten Bereich (B2) befindet und einen vorbestimmten Abstand zu dem Übergang (8) unterschreitet, oder falls sich der vorbestimmte Reifenbereich (11) des zumindest einen Rads (9) in dem ersten Bereich (B1) befindet.

4. Verfahren nach Anspruch 3,
**dadurch gekennzeichnet, dass**
für den sich in dem zweiten Bereich (B2) befindlichen Reifenbereich (11) als der vorbestimmte Abstand ein Wert zwischen einschließlich 15 cm und einschließlich 20 cm vorgegeben wird.

5. Verfahren nach einem der Ansprüche 2 bis 4,
**dadurch gekennzeichnet, dass**
die Position des Reifenbereiches (11) relativ zu dem Übergang (8) anhand von zumindest einem Odometrieparameter des Kraftfahrzeugs (1) bestimmt wird.

6. Verfahren nach einem der vorhergehenden Ansprüche,
**dadurch gekennzeichnet, dass**
bei einer als fehlgeschlagen bewerteten Überfahrt das zumindest eine Rad (9) durch automatisches Beschleunigen des Kraftfahrzeugs (1) autonom von dem zweiten Bereich (B2) in den ersten Bereich (B1) bewegt wird.

7. Verfahren nach einem der vorhergehenden Ansprüche,
**dadurch gekennzeichnet, dass**
das zumindest eine Rad (9) des Kraftfahrzeugs (1) bei einer als fehlgeschlagen bewerteten Überfahrt für eine erneute Überfahrt des Übergangs (8) von dem zweiten Bereich (B2) zu einer vorbestimmten Startposition (10) relativ zu dem Übergang (8) in dem ersten Bereich (B1) bewegt wird.

8. Verfahren nach Anspruch 7,
**dadurch gekennzeichnet, dass**
das Kraftfahrzeug (1) zum Bereitstellen einer Rollbewegung von dem zweiten Bereich (B2) in den ersten Bereich (B1) automatisch in einen Leerlauf überführt wird, bestimmt wird, ob eine Position des zumindest einen Rads (9) nach Beendigung der Rollbewegung mit der Startposition (10) übereinstimmt, und das zumindest eine Rad (9) durch automatisches Beschleunigen des Kraftfahrzeugs (1) an der Startposition (10) positioniert wird, falls die Position des zumindest einen Rades (9) nach der Beendigung der Rollbewegung nicht mit der Startposition (10) übereinstimmt.

9. Verfahren nach Anspruch 8,
**dadurch gekennzeichnet, dass**
die Position des zumindest einen Rads (9) bezüglich der Startposition (10) anhand von zumindest einem Odometrieparameter während der Rollbewegung des zumindest einen Rads (9) bestimmt wird.

10. Fahrerassistenzsystem (2) für ein Kraftfahrzeug (1) zum zumindest semi-autonomen Einparken des Kraftfahrzeugs (1) in eine Parklücke (3) aufweisend einen ersten Bereich (B1) und einen gegenüber dem ersten Bereich (B1) erhöhten zweiten Bereich (B1), wobei das Fahrerassistenzsystem (2) zum Durchführen eines Verfahrens nach einem der vorhergehenden Ansprüche ausgelegt ist.

11. Kraftfahrzeug (1) mit einem Fahrerassistenzsystem (2) nach Anspruch 10.

## Claims

1. Method for at least semi-autonomous parking of a motor vehicle (1) in a parking space (3) having a first region (B1) and a second region (B2) which is raised compared with the first region (B1), wherein in the method a junction (8) between the first region (B1) and the second region (B2) is at least partially driven over by at least one wheel (9) of the motor vehicle (1) during the parking process, wherein travel over the junction (8) is evaluated as successful or failed on the basis of the at least one wheel (9) which is located at least partially in the second region (B2), and the at least one wheel (9) is moved from the second region (B2) back into the first region (B1) if the travel over the junction (8) is evaluated as failed,
**characterized in that**
in the case of travel over the junction (8) which is evaluated as failed the motor vehicle (1) is transferred automatically into an idling mode and the at least one wheel (9) is moved from the second region (B2) into the first region (B1) by a rolling movement, caused by the idling mode, of the at least one wheel (9).

2. Method according to Claim 1,
**characterized in that**
the travel over the junction (8) is evaluated on the basis of a position of a predetermined tyre region (11) of the at least one wheel (9) relative to the junction (8).

3. Method according to Claim 2,
**characterized in that**
the travel over the junction (8) is evaluated as failed if the predetermined tyre region (11) of the at least one wheel (9) is located in the second region (B2) and undershoots a predetermined distance from the junction (8), or if the predetermined tyre region (11) of the at least one wheel (9) is located in the first region (B1).

4. Method according to Claim 3,
**characterized in that**
a value between inclusively 15 cm and inclusively 20 cm is predefined as the predetermined distance from the tyre region (11) located in the second region (B2).

5. Method according to one of Claims 2 to 4,
**characterized in that**
the position of the tyre region (11) relative to the junction (8) is determined on the basis of at least one odometry parameter of the motor vehicle (1).

6. Method according to one of the preceding claims,
**characterized in that**
in the case of travel over the junction (8) which is evaluated as failed the at least one wheel (9) is moved autonomously from the second region (B2) into the first region (B1) by automatic acceleration of the motor vehicle (1).

7. Method according to one of the preceding claims,
**characterized in that**
in the case of travel over the junction (8) which is evaluated as failed, the at least one wheel (9) of the motor vehicle (1) is moved, for renewed travel over the junction (8), from the second region (B2) to a predetermined starting position (10) relative to the junction (8) in the first region (B1).

8. Method according to Claim 7,
**characterized in that**
in order to make available a rolling movement from the second region (B2) into the first region (B1), the motor vehicle (1) is transferred automatically into an idling mode, it is determined whether a position of the at least one wheel (9) after the ending of the rolling movement corresponds to the starting position (10), and the at least one wheel (9) is positioned at the starting position (10) by automatic acceleration of the motor vehicle (1) if the position of the at least one wheel (9) does not correspond to the starting position (10) after the ending of the rolling movement.

9. Method according to Claim 8,
**characterized in that**
the position of the at least one wheel (9) with respect to the starting position (10) is determined on the basis of at least one odometry parameter during the rolling movement of the at least one wheel (9).

10. Driver assistance system (2) for a motor vehicle (1) for at least semi-autonomous parking of the motor vehicle (1) in a parking space (3), having a first region (B1) and a second region (B1) which is raised with respect to the first region (B1), wherein the driver assistance system (2) is configured to carry out a method according to one of the preceding claims.

11. Motor vehicle (1) having a driver assistance system (2) according to Claim 10.

## Revendications

1. Procédé destiné à la mise en stationnement au moins semi-autonome d'un véhicule automobile (1) dans un emplacement de stationnement (3) comprenant une première zone (B1) et une deuxième zone (B2) surélevée par rapport à la première zone (B1), une transition (8) entre la première zone (B1) et la deuxième zone (B2) étant, selon le procédé, dépassée au moins partiellement par au moins une roue (9) du véhicule automobile (1) pendant la mise en stationnement,
un dépassement de la transition (8) étant évalué comme réussi ou comme ayant échoué sur la base de ladite au moins une roue (9) se trouvant au moins partiellement dans la deuxième zone (B2), et ladite au moins une roue (9) étant ramenée de la deuxième zone (B2) à la première zone (B1) dans le cas où le dépassement est évalué comme ayant échoué, **caractérisé en ce**
**qu'**en cas de dépassement évalué comme ayant échoué, on fait passer le véhicule automobile (1) automatiquement au ralenti et ladite au moins une roue (9) est déplacée de la deuxième zone (B2) à la première zone (B1) par un déplacement de roulement, provoquée par le ralenti, de ladite au moins une roue (9).

2. Procédé selon la revendication 1,
**caractérisé en ce que**
le dépassement est évalué sur la base d'une position d'une zone de pneu (11) prédéterminée de ladite au moins une roue (9) par rapport à la transition (8).

3. Procédé selon la revendication 2,
**caractérisé en ce que**
le dépassement est évalué comme ayant échoué dans le cas où la zone de pneu (11) prédéterminée de ladite au moins une roue (9) se trouve dans la deuxième zone (B2) et passe en dessous d'une distance prédéterminée par rapport à la transition (8), ou dans le cas où la zone de pneu (11) prédéterminée de ladite au moins une roue (9) se trouve dans la première zone (B1).

4. Procédé selon la revendication 3,
**caractérisé en ce que**,
pour la zone de pneu (11) se trouvant dans la deuxième zone (B2), une valeur comprise entre 15 cm inclus et 20 cm inclus est prédéfinie en tant que distance prédéterminée.

5. Procédé selon l'une quelconque des revendications 2 à 4,
**caractérisé en ce que**
la position de la zone de pneu (11) par rapport à la transition (8) est déterminée sur la base d'au moins un paramètre d'odométrie du véhicule automobile (1).

6. Procédé selon l'une quelconque des revendications précédentes,
**caractérisé en ce**
**qu'**en cas de dépassement évalué comme ayant échoué, ladite au moins une roue (9) est déplacée de manière autonome de la deuxième zone (B2) à la première zone (B1) par une accélération automatique du véhicule automobile (1).

7. Procédé selon l'une quelconque des revendications précédentes,
**caractérisé en ce que**
ladite au moins une roue (9) du véhicule automobile (1) est, en cas de dépassement évalué comme ayant échoué, déplacée pour un nouveau dépassement de la transition (8) de la deuxième zone (B2) à une position de départ (10) prédéterminée par rapport à la transition (8) dans la première zone (B1).

8. Procédé selon la revendication 7,
**caractérisé en ce que**,
pour produire un déplacement de roulement de la deuxième zone (B2) à la première zone (B1), on fait passer le véhicule automobile (1) automatiquement au ralenti, on détermine si une position de ladite au moins une roue (9) coïncide avec la position de départ (10) une fois le déplacement de roulement achevé, et ladite au moins une roue (9) est positionnée à la position de départ (10) par accélération automatique du véhicule automobile (1), dans le cas où la position de ladite au moins une roue (9) ne coïncide pas avec la position de départ (10) une fois le déplacement de roulement achevé.

9. Procédé selon la revendication 8,
**caractérisé en ce que**
la position de ladite au moins une roue (9) par rapport à la position de départ (10) est déterminée sur la base d'au moins un paramètre d'odométrie pendant le déplacement de roulement de ladite au moins une roue (9).

10. Système d'aide à la conduite (2) pour un véhicule automobile (1), lequel système est destiné à la mise en stationnement au moins semi-autonome du véhicule automobile (1) dans un emplacement de stationnement (3) comprenant une première zone (B1) et une deuxième zone (B1) surélevée par rapport à la première zone (B1), le système d'aide à la conduite (2) étant conçu pour la mise en oeuvre d'un procédé selon l'une quelconque des revendications précédentes,

11. Véhicule automobile (1) comprenant un système d'aide à la conduite (2) selon la revendication 10.
